(19) Europäisches Patentamt
European Patent Office
Office européen des brevets

(11) **EP 1 796 903 B1**

(12) **EUROPÄISCHE PATENTSCHRIFT**

(45) Veröffentlichungstag und Bekanntmachung des Hinweises auf die Patenterteilung:
**25.06.2014 Patentblatt 2014/26**

(21) Anmeldenummer: **05796268.0**

(22) Anmeldetag: **05.10.2005**

(51) Int Cl.:
***B32B 27/32*** *(2006.01)*

(86) Internationale Anmeldenummer:
**PCT/EP2005/010746**

(87) Internationale Veröffentlichungsnummer:
**WO 2006/040057 (20.04.2006 Gazette 2006/16)**

(54) **ETIKETTENFOLIE FÜR TIEFZIEHVERFAHREN**

LABEL FILM FOR DEEP DRAWING METHODS

FILM D'ETIQUETTES DESTINE A UN PROCEDE D'EMBOUTISSAGE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **07.10.2004 DE 102004048811**

(43) Veröffentlichungstag der Anmeldung:
**20.06.2007 Patentblatt 2007/25**

(73) Patentinhaber: **Treofan Germany GmbH & Co.KG 66539 Neunkirchen (DE)**

(72) Erfinder:
- **SCHMITZ, Bertram
  F-57200 Sarreguemines (FR)**
- **KOCHEM, Karl-Heinz
  66539 Neunkirchen (DE)**

- **TEWS, Wilfrid
  66894 Bechhofen (DE)**

(74) Vertreter: **Kremer, Viola et al
Treofan Germany GmbH & Co. KG
Am Prime Parc 17
65479 Raunheim (DE)**

(56) Entgegenhaltungen:
**EP-A- 0 865 909     EP-A- 1 369 221
WO-A-99/55518     WO-A-03/091316
DE-A1- 4 420 991**

- **DATABASE WPI Section Ch, Week 198740
  Derwent Publications Ltd., London, GB; Class
  A17, AN 1987-280755 XP002372023 & JP 62
  195030 A (TORAY IND INC) 27. August 1987
  (1987-08-27)**

**Beschreibung**

Die vorliegende Erfindung betrifft die Verwendung einer biaxial orientierten Polypropylenfolie als In-Mould-Etikett beim Tiefziehen.

Etikettenfolien umfassen ein umfangreiches und technisch komplexes Gebiet. Man unterscheidet verschiedene Etikettiertechniken, welche hinsichtlich der Prozeßbedingungen grundverschieden sind und zwangsläufig an die Etikettenmaterialien unterschiedliche technische Anforderungen stellen. Allen Etikettierprozeßen ist gemeinsam, daß als Endergebnis optisch ansprechend etikettierte Behältnisse resultieren müssen, bei denen eine gute Haftung auf dem etikettierten Behältnis gewährleistet sein muß.

Bei den Etikettierverfahren werden sehr verschiedene Techniken zum Applizieren des Etiketts angewendet. Man unterscheidet zwischen Selbstklebeetiketten, Rundumetiketten, Schrumpfetiketten, In-Mould Etiketten, Patch Labelling etc. Die Verwendung einer Folie aus thermoplastischem Kunststoff als Etikett ist in allen diesen verschiedene Etikettierverfahren möglich.

Auch beim In-Mould Etikettieren wird zwischen verschiedenen Techniken unterschieden, bei denen verschiedene Verfahrensbedingungen angewendet werden. Allen In-Mould Etikettierverfahren ist gemeinsam, daß das Etikett am eigentlichen Formgebungsverfahren des Behälters teilnimmt und währenddessen appliziert wird. Hierbei kommen jedoch sehr verschiedene Formgebungsverfahren zum Einsatz, wie beispielsweise Spritzgußverfahren, Blasformverfahren, Tiefziehverfahren.

Beim Spritzgußverfahren wird ein Etikett in die Spritzgußform eingelegt und von einem schmelzeflüssigen Kunststoff hinterspritzt. Durch die hohen Temperaturen und Drücke verbindet sich das Etikett mit dem Spritzgußteil und wird zum integralen, nicht ablösbaren Bestandteil des Spritzlings. Nach diesem Verfahren werden beispielsweise Becher und Deckel von Eiscreme- oder Margarinebechern hergestellt.

Hierbei werden einzelne Etiketten einem Stapel entnommen oder von einer Rolle zugeschnitten und in die Spritzgußform eingelegt. Die Form ist dabei so gestaltet, daß der Schmelzestrom hinter das Etikett gespritzt wird und die Vorderseite der Folie an der Wandung der Spritzgußform anliegt. Beim Spritzen verbindet sich die heiße Schmelze mit dem Etikett. Nach dem Spritzen öffnet sich das Werkzeug, der Spritzling mit Etikett wird ausgestoßen und kühlt ab. Im Ergebnis muß das Etikett faltenfrei und optisch einwandfrei auf dem Behälter haften.

Beim Spritzen liegt der Einspritzdruck in einem Bereich von 300 bis 600 bar. Die zum Einsatz kommenden Kunststoffe haben einen Schmelzflußindex von um die 40 g/10min. Die Einspritztemperaturen hängen von dem eingesetzten Kunststoff ab. In manchen Fällen wird die Form zusätzlich gekühlt und ein Verkleben des Spritzlings mit der Form zu vermeiden.

Beim Tiefziehen werden unorientierte dicke Kunststoffplatten, meist gegossenes PP oder PS (Polystyrol), in einer Dicke von ca. $200 \mu$m erwärmt und mittels Vakuum oder Stempelwerkzeugen in ein entsprechendes Formwerkzeug gezogen oder gedrückt. Auch hierbei wird das einzelne Etikett in die Form eingelegt und verbindet sich beim Formprozeß mit dem eigentlichen Behälter. Es kommen erheblich niedrigere Temperaturen zur Anwendung, so daß die Haftung des Etiketts an dem Behälter ein kritischer Faktor sein kann. Die gute Haftung muß auch bei diesen niedrigen Verarbeitungstemperaturen gewährleistet sein. Die Verarbeitungsgeschwindigkeiten dieses Verfahrens sind niedriger als beim Spritzguß.

Auch beim Blasformen von Behältern oder Hohlkörpern ist eine direkte In-Mould Etikettierung möglich. Bei diesem Verfahren wird ein Schmelzeschlauch durch eine Ringdüse vertikal nach unten extrudiert. Ein vertikal geteiltes Formwerkzeug fährt zusammen und umschließt den Schlauch, der dabei am unteren Ende zugequetscht wird. Am oberen Ende wird ein Blasdorn eingeführt durch den die Öffnung des Formlings ausgebildet wird. Über den Blasdorn wird dem warmen Schmelzeschlauch Luft zugeführt, so daß er sich ausdehnt und sich an die Innenwände des Formwerkzeugs anlegt. Hierbei muß sich das Etikett mit dem zähflüssigen Kunststoff des Schmelzeschlauchs verbinden. Anschließend wird die Form geöffnet und der Überstand an der geformten Öffnung abgeschnitten. Der geformte und etikettierte Behälter wird ausgestoßen und kühlt ab.

Bei diesen Blasformverfahren beträgt der Druck beim Aufblasen des Schmelzeschlauchs ca. 4-15 bar und die Temperaturen sind wesentlich niedriger als beim Spritzgießen. Die Kunststoffmaterialien haben einen niedrigeren MFI als beim Spitzgießen, um einen formstabilen Schmelzeschlauch zu bilden und verhalten sich daher beim Abkühlungsprozeß anders als die niederviskosen Materialien für das Spritzgießen.

Grundsätzlich können auch beim Tiefziehen Folien aus thermoplastischen Kunststoffen zur Etikettierung der Behältnisse beim Formen eingesetzt werden. Die Folien müssen hierzu ein ausgewähltes Eigenschaftsprofil aufweisen, um zu gewährleisten, daß sich die Etikettenfolie und der tiefgezogene Formkörper glatt und blasenfrei während des Tiefziehens aneinander schmiegen und sich miteinander verbinden.

Häufig ist die Haftung des Etiketts auf dem Behälter mangelhaft, da beim Tiefziehen vergleichsweise niedrigere Temperaturen und Drücke als bei Spritzguß- oder Blasformverfahren Anwendung finden. Des weiteren treten ähnlich wie beim Blasformen Lufteinschlüsse zwischen Etikett und Behälter auf, welche die Optik des etikettierten Behälters als auch die Haftung beeinträchtigen. Daher sind Etiketten für Tiefziehanwendungen mit speziellen Haftschichten ausgerüstet, welche eine gute Haftung auf dem Behälter gewährleisten. Hier kommen coextrudierte niedrigsiegelnde Deckschichten oder spezielle Kleberschichten zum Einsatz.

Eine derartige Folie ist beispielsweise in WO 02/45956 beschrieben. Die Deckschicht dieser Folie weißt verbesserte Hafteigenschaften gegenüber verschiedensten Materialien auf. Die Deckschicht enthält als Hauptkomponente ein Co- oder Terpolymeres aus einem Olefin und ungesättigten Carbonsäuren oder deren Estern. Es ist beschrieben, daß auf Grund der verbesserten Haftung diese Folie auch als Etikett beim Tiefziehen eingesetzt werden kann.

EP 0 865 909 beschreibt die Verwendung von "microvoided" Folien für Etiketten. Die Folie enthält ein ß-Nukleiierungsmittel, durch welches beim Abkühlen des Schmelzefilms ein erhöhter Anteil an ß-kristallinem Polypropylen in der Vorfolie erzeugt wird. Beim Verstrecken der Vorfolie werden "microvoids" erzeugt. Es ist beschrieben, daß die Folie eine gute Bedruckbarkeit aufweist.

WO 03/091316 beschreibt die Verwendung einer biaxial orientierten mikroporösen Folie, die ein Propylenpolymeres und mindestens ein ß-Nukleiierungsmittel enthält und deren Mikroporösitat durch Umwandlung von ß-kristallinem Polypropylen beim Verstrecken der Folie erzeugt wird. Es ist beschrieben, daß diese Folie vorteilhaft als Etikett beim Blasformen eingesetzt werden kann.

WO 03/7091316 beschreibt die Verwendung einer biaxial orientierten mikroporösen Folie, die Propylenpolymer und mindestens ein ß-Nukleiierungsmittel enthält zur Etikettierung von Behältnissen beim Blasformen. Die Mikroporosität dieser Folie wird durch Umwandlung von ß-kristallinem Polypropylen beim Verstrecken der Folie erzeugt. Es werden einleitend verschiedene Etikettiertechniken und Formgebungsverfahren, wie z.B. Spritzgießen, Blasformen und Tiefziehen erläutert. Es wird nur die Verwendung der erfindungsgemäßen mikroporösen Folie als Blasform-Etikett angegeben.

EP 0865 909 beschreibt einschichtig oder mehrschichtige Etiketten aus mikroporöser Folie. Diese werden aus Polypropylen hergestellt, welches ß-Nukleiierungsmittel enthält und biaxial verstreckt wird. Es wird erläutert, daß durch die Verstreckung des ß-Polypropylens Porosität erzeugt wird, welche mit einer reduzierten Dichte und einem weiß-opaken Aussehen der Folie einher geht. Es wird nicht beschrieben in welchen Etikettenanwendungen im Einzelnen die Folie eingesetzt werden kann.

DE 44 20 991 beschreibt Produkte mit einem erhöhten Gehalt an ß-Polypropylen, insbesondere die Verwendung von Polypropylen mit ß-Nukleiierungsmittel zur Herstellung eines tiefgezogenen Behälters. Poröse Produkte oder poröse Folien werden nicht beschrieben.

Die Aufgabe der vorliegenden Erfindung bestand darin, eine Etikettenfolie zur Verfügung zu stellen, welche beim Tiefziehverfahren eingesetzt werden kann und welche ein gute Haftung gegenüber dem Behälter und keine Lufteinschlüsse aufweist.

Die der Erfindung zugrundeliegende Aufgabe wird gelöst durch die Verwendung einer biaxial orientierten Folie mit einer mikroporösen Schicht, die Polypropylen und ß-Nukleiierungsmittel enthält und deren Mikroporosität durch Umwandlung von ß-kristallinem Polypropylen beim Verstrecken der Folie erzeugt wird, zur Etikettierung von Behältnissen beim Tiefziehen.

Es wurde gefunden, daß sich eine Folie mit einer mikroporösen Schicht hervorragend beim Tiefziehen als Etikett verwenden läßt und bei den speziellen Verfahrensbedingungen des Tiefziehverfahrens keine Blasen oder Lufteinschlüsse auftreten, wenn diese Mikroporosität indirekt durch ß-Nukleiierungsmittel erzeugt wird. Diese so erzeugten Strukturen unterscheiden sich signifikant von denen herkömmlicher vakuolenhaltiger Folien.

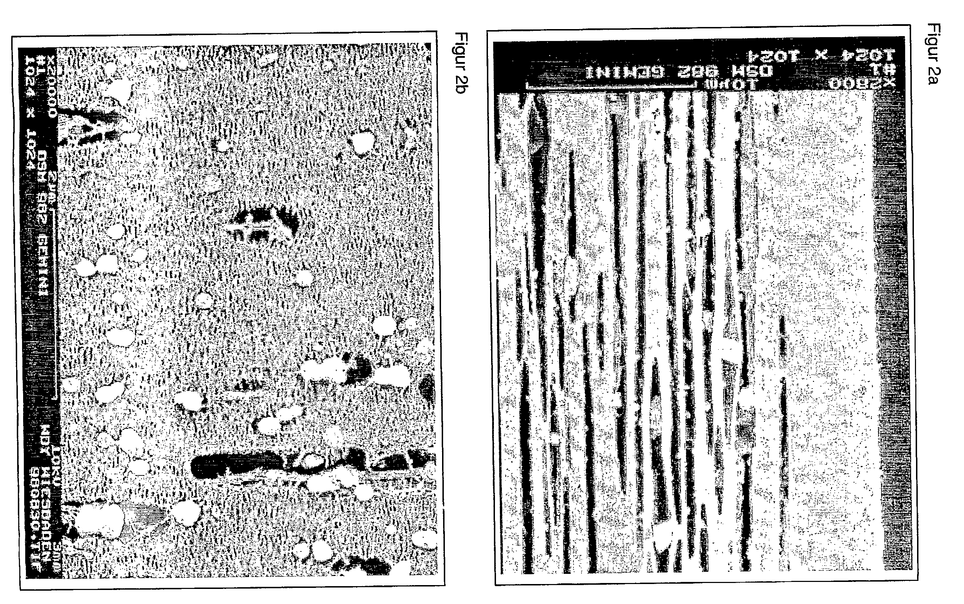

Die Figuren 2a und 2b zeigen die typische Struktur einer vakuolenhaltigen Schicht aus thermoplastischem Polymer und unverträglichen Füllstoffen im Querschnitt (2a) und in einer Draufsicht (2b). Durch die Unverträglichkeit der vakuoleninitierenden Teilchen kommt es beim Verstrecken zu Abrißen zwischen der Oberfläche des Teilchens und der Polymermatrix und es entsteht ein geschlossener luftgefüllter Hohlraum, der als Vakuole bezeichnet wird. Diese Vakuolen sind über die gesamte Schicht verteilt und reduzieren die Dichte der Folien, bzw. der Schicht. Diese Folien zeigen jedoch noch immer eine gute Barriere, beispielsweise gegenüber Wasserdampf, da die Vakuolen geschlossen sind und die Struktur insgesamt nicht durchlässig ist.

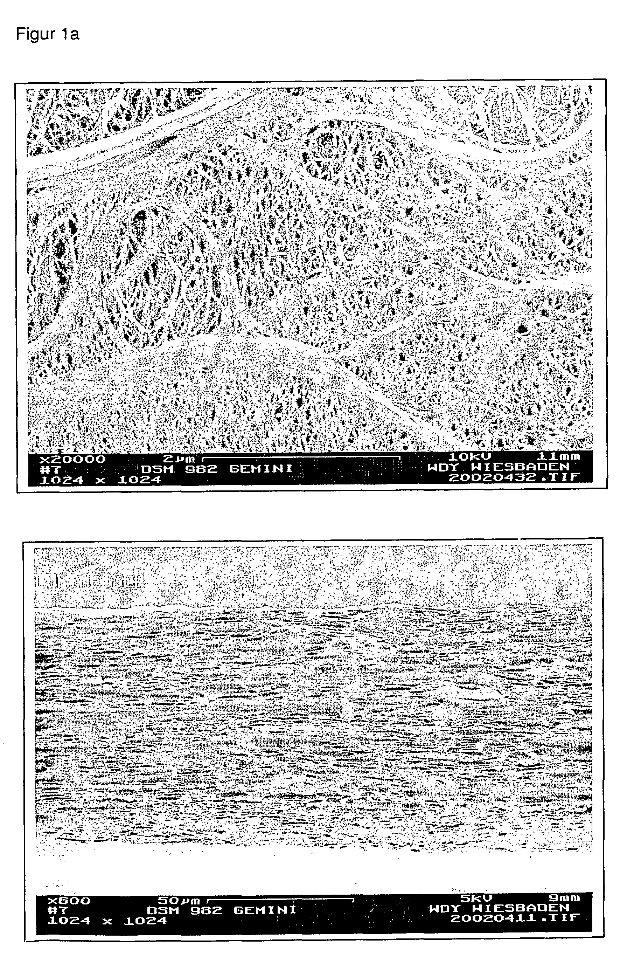

Im Unterschied hierzu ist die poröse Schicht gemäß der vorliegenden Erfindung gasdurchlässig und zeigt wie aus den Figuren 1 a (Draufsicht) und 1 b (Querschnitt), ersichtliche eine offenporige Netzstruktur. Diese Struktur entsteht nicht durch unverträgliche Füllstoffe, sondern nach einem technisch ganz verschiedenen Verfahren. Die mikroporöse Schicht enthält Poylpropylen und ß-Nukleiierungsmittel. Diese Mischung aus Polypropylen mit ß-Nukleiierungsmittel wird zunächst wie üblich bei der Folienherstellung in einem Extruder aufgeschmolzen und durch eine Breitschlitzdüse als Schmelzefilm auf eine Abkühlwalze extrudiert. Das ß-Nukleiierungsmittel fördert die Kristallisation von ß-kristallinem Polypropylen beim Abkühlen des Schmelzefilms, so daß eine unverstreckte Vorfolie mit einem hohen Gehalt an ß-kristallinem Polypropylen entsteht. Beim Verstrecken dieser Vorfolie können die Temperatur und Streckbedingungen so gewählt werden, daß sich die ß-Kristallite in die thermisch stabilere alpha Kristallite des Polypropylens umwandeln. Da die Dichte der ß-Kristallite niedriger ist geht diese Umwandlung mit einer Volumenschrumpfung in diesem Bereich einher, führt in Verbindung mit dem Steckprozeß zu der charakteristischen porösen Struktur, ähnlich einem aufgerissenen Netzwerk. Äußerlich sieht die Folie weiß und undurchsichtig aus, auch wenn keine Pigmente oder Füllstoffe enthalten sind.

Beide Verfahren sind an sich im Stand der Technik bekannt. Überraschenderweise wurde gefunden, daß eine Folie mit poröser Schicht keine Orangenhaut und Blasenbildung aufweist, wenn sie bei Tiefziehverfahren als Etikettenfolie eingesetzt wird und eine überraschend gute Haftung gegenüber dem Behälter aufweist. Opake Folien mit einer vakuolenhaltigen Schicht ergeben als Etikett bei Tiefziehverfahren die unerwünschte Orangenhaut und Blasenbildung. Überraschenderweise ist die Haftung der Folie mit mikroporöser Schicht wesentlich verbessert gegenüber Folien aus Polypropylen mit einer vakuolenhaltigen Struktur. Es ist insbesondere sehr überraschend, daß die fibrillenartige spezielle Struktur der mikroporösen Schicht einen positiven Einfluß auf die Haftfestigkeit beim Tiefziehen hat. Nach dem gängigen Fachwissen wird die.Haftung in erster Linie durch die Eigenschaften des Polymeren der Schicht bestimmt, die sich im Kontakt mit dem Behältnis befindet, beispielsweise trägt ein niedriger Schmelzpunkt oder eine Modifizierung des Polymeren zu einer verbesserten Haftung bei.

Die Zusammensetzung der mikroporösen Schicht, nachstehend auch Schicht genannt, wird nunmehr im einzeln näher beschrieben. Die mikroporöse Schicht enthält Propylen-Homopolymer und/oder ein Propylenblockcopolymer, gegebenenfalls zusätzlich andere Polyolefine, und mindestens ein ß-Nukleierungsmittel, sowie gegebenenfalls zusätzlich übliche Additive, beispielsweise Stabilisatoren, Neutralisationsmittel, Gleitmittel, Antistatika, Pigmente in jeweils wirksamen Mengen. Im allgemeinen wird auf zusätzliche unverträgliche vakuolenintierende Füllstoffe wie Calciumcarbonat oder Polyester, wie PET oder PBT, verzichtet, so daß die Schicht im allgemeinen weniger als 5 Gew.-%, vorzugsweise 0 bis höchstens 1 Gew.-% dieser vakuoleninitierenden Füllstoffe enthält. Derartige geringe Mengen können beispielsweise über die Einarbeitung von Folienregenerat in die Schicht gelangen.

Im allgemeinen enthält die mikroporöse Schicht mindestens 70 - >100Gew.-%, vorzugsweise 80 bis 99,95 Gew.-%, insbesondere 90 bis 97 Gew.-%, eines Propylenhomopolymeren und/oder Propylenblockcopolymeren und 0,001 bis 5 Gew.-%, vorzugsweise 0,1 bis 3 Gew.-% mindestens eines ß-Nukleierungsmittels, jeweils bezogen auf das Gewicht der Schicht (Rest sind andere Polyolefine und/oder die genannten Zusatzstoffe).

Geeignete Propylenhomopolymeren enthalten 80 bis 100 Gew.-%, vorzugsweise 90 bis 100 Gew.-% Propyleneinheiten und besitzen einen Schmelzpunkt von 140°C oder höher, vorzugsweise 150 bis 170°C, und im allgemeinen einen Schmelzflußindex von 0,5 bis 10 g/10 min, vorzugsweise 2 bis 8 g/10 min, bei 230°C und einer Kraft von 2,16 kg (DIN 53735). Isotaktische Propylenhomopolymere mit einem ataktischen Anteil von 15 Gew.-% und weniger, stellen bevorzugte Propylenpolymere für die Schicht dar, wobei isotaktisches Propylenhomopolymer besonders bevorzugt ist.

Geeignete Propylenblockcopolymere enthalten überwiegend, d.h. mehr als 50 Gew.-%, vorzugsweise 70 bis 99 Gew.-%, insbesondere 90 bis 99 Gew.-% Propyleneinheiten. Geeignete Comonomere in entsprechenden Mengen sind Ethylen, Butylen oder höhere Alkenhomologe, worunter Ethylen bevorzugt ist. Der Schmelzflußindex der Blockcopolymeren liegt in einem Bereich von 1 bis 15 g/10min, vorzugsweise 2 bis 10g/10Min. Der Schmelzpunkt liegt über 140°C, vorzugsweise in einem Bereich von 150 bis 165 °C.

Die angegebenen Gewichtsprozente beziehen sich auf das jeweilige Polymere.

Mischungen aus Propylenhomopolymer und Propylenblockcopolymer enthalten diese beide Komponenten in beliebigen Mischungsverhältnissen. Vorzugsweise liegt das Verhältnis von Propylenhomopolymer zu Propylenblockcopolymer in einem Bereich von 10 zu 90 Gew.% bis 90 zu 10 Gew.%, vorzugsweise, 20 zu 70 Gew.% bis 70 zu 20 Gew.%. Derartige Mischungen aus Homopolymer und Blockcopolymer sind besonders bevorzugt und verbessern die Optik der mikroporösen Schicht.

Gegebenenfalls kann die poröse Schicht zusätzlich zu dem Propylenhomopolymeren und/oder Propylenblockcopolymeren anderer Polyolefine enthalten. Der Anteil dieser anderen Polyolefine liegt im allgemeinen unter 30 Gew.-%, vorzugsweise in einem Bereich von 1 bis 20 Gew.-%. Andere Polyolefine sind beispielsweise statistische Copolymere von Ethylen und Propylen mit einem Ethylengehalt von 20 Gew.-% oder weniger, statistische Copolymere von Propylen mit $C_4$-$C_8$-Olefinen mit einem Olefingehalt von 20 Gew.-% oder weniger, Terpolymere von Propylen, Ethylen und Butylen mit einem Ethylengehalt von 10 Gew.-% oder weniger und mit einem Butylengehalt von 15 Gew.-% oder weniger, oder Polyethylene, wie HDPE, LDPE, VLDPE, MDPE und LLDPE.

Als ß-Nukleierungsmittel für die mikroporöse Schicht sind grundsätzlich alle bekannten Zusatzstoffe geeignet, welche die Bildung von ß-Kristallen beim Abkühlen einer Polypropylenschmelze fördern. Derartige ß-Nukleierungsmittel, als auch ihre Wirkungsweise in einer Polypropylenmatrix, sind an sich im Stand der Technik bekannt und werden nachstehend im Einzelnen beschrieben.

Von Polypropylen sind verschiedene kristalline Phasen bekannt. Beim Abkühlen einer Schmelze bildet sich üblicherweise überwiegend das α-kristalline PP, dessen Schmelzpunkt bei ca. 158 - 162 °C liegt. Durch eine bestimmte Temperaturführung kann beim Abkühlen ein geringer Anteil an ß-kristalliner Phase erzeugt werden, welche gegenüber der monoklinen α-Modifikation mit 148-150°C einen deutlich niedrigeren Schmelzpunkt aufweist. Im Stand der Technik sind Additive bekannt, die zu einem erhöhten Anteil der ß-Modifikation beim Auskristallisieren des Polypropylens führen, beispielsweise γ-Quinacridone, Dihydroquinacridine oder Calciumsalze der Phtalsäure. Für die Zwecke der vorliegenden Erfindung werden in der porösen Schicht vorzugsweise hochaktive ß-Nukleierungsmittel eingesetzt, welche beim Abkühlen des Schmelzefilms einen ß-Anteil von 30-90%, vorzugsweise von 50-80% erzeugen. Hierfür ist beispielsweise ein zweikomponentiges Nukleierungssystem aus Calciumcarbonat und organischen Dicarbonsäuren geeignet, welches in der DE 3610644 beschrieben ist, auf welche hiermit ausdrücklich Bezug genommen wird. Besonders vorteilhaft sind Calciumsalze der Dicarbonsäuren, wie Calciumpimelat oder Calciumsuberat wie in DE 4420989 beschrieben, auf die ebenfalls ausdrücklich Bezug genommen wird. Auch die in EP-0557721 beschriebenen Dicarboxamide insbesondere N,N-Dicyclohexyl-2,6-Naphtalen dicarboxamide sind geeignete ß-Nukleierungsmittel.

Zusätzlich zu den Nukleierungsmitteln ist die Einhaltung eines bestimmten Temperaturbereiches und die Verweilzeit des Schmelzefilms bei diesen Temperaturen beim Abziehen des extrudierten Schmelzefilms für die Erzielung eines hohen Anteils an ß-kristallinem Polypropylen in der Vorfolie wichtig. Die Abkühlung des extrudierten Schmelzefilms erfolgt vorzugsweise bei einer Temperatur von 60 bis 130°C, insbesondere 80 bis 120°C. Eine langsame Abkühlung fördert das Wachstum der ß-Kristallite ebenfalls, daher sollte die Abzugsgeschwindigkeit, d.h. die Geschwindigkeit mit welcher der Schmelzefilm über die erste Kühlwalze läuft, langsam sein. Bei einer gegebenen Anordnung von Abzugswalzen kann über die Abzugsgeschwindigkeit sichergestellt werden, daß die Folie langsam auf die jeweilige Temperatur abkühlt , bzw. ausreichend lange bei dieser Temperatur gehalten wird. Im allgemeinen sind Verweilzeiten von 10 sec bis zu mehreren Minuten möglich. Längere Verweilzeiten von über 3 Minuten sind zwar technisch möglich und erhöhen den ß-Kristallinen Anteil in an sich vorteilhafter Weise, aber mit einer derartigen Prozeßführung wird der Herstellprozeß sehr langsam und dadurch unökonomisch. Daher beträgt die Verweilzeit vorzugsweise 15 bis 120 sec. Die Abzugsgeschwindigkeit beträgt vorzugsweise weniger als 25 m/min, insbesondere 1 bis 20 m/min. Je höher der erzielte Anteil an ß-Kristallen in der Vorfolie desto einfacher sind die netzartigen porösen Strukturen durch Verstrecken zu erzielen, im allgemeinen werden bei gleichbleibenden Verfahrensbedingungen umso höhere Porositäten erzielt je höher der ß-Anteil in der Vorfolie ist.

Besonders bevorzugte Ausführungsformen enthalten 0,001 bis 5 Gew.-%, vorzugsweise 0,05 bis 0,5 Gew.-%, insbesondere 0,1 bis 0.3 Gew.-% CalciumPimelat oder Calcium-Suberat in der mikroporösen Schicht aus Propylenpolymer.

Im allgemeinen ist die mikroporöse Etikettenfolie einschichtig und besteht nur aus der mikroporösen Schicht. Es versteht sich jedoch von selbst, daß diese einschichtige Folie gegebenenfalls mit einer Bedruckung oder einer Beschichtung versehen werden kann, bevor sie als Etikettenfolie beim Tiefziehen eingesetzt wird. Bei derartigen mehrschichtigen Folien steht selbstverständlich die Oberfläche der porösen Schicht in Kontakt mit dem Behälter und die Bedruckung oder Beschichtung bildet die Außenseite des Etiketts. Für solche einschichtigen Ausführungsformen liegt die Dicke der Folie, d.h. der porösen Schicht in einem Bereich von 20 bis 150$\mu$m, vorzugsweise 30 bis 100$\mu$m.

Gegebenfalls kann die mikroporöse Schicht auf der Außenseite mit einer Corona, Flamm- oder Plasmabehandlung versehen werden, um die Haftung gegenüber Druckfarben oder Beschichtungen zu verbessern.

Die Dichte der mikroporösen Schicht liegt im allgemeinen in einem Bereich von 0,2 bis 0,80 g/cm$^3$, vorzugsweise 0,3 bis 0,65 g/cm$^3$, wobei eine Dichte von weniger als 0,6 g/cm$^3$ bevorzugt ist. Überraschenderweise wurde gefunden, daß eine besonders niedrige Dichte nicht wie bei vakuolenhaltigen, opaken Folien zu einer Verstärkung der Orangenhaut führt. Bezüglich vakuolenhaltiger, opaker Folien lehren einschlägige Schriften, daß eine zu niedrige Dichte durch zu starkes voiding zu einem verstärkten Orangenhauteffekt führt. Überraschenderweise ist dies bei porösen Folien nicht der Fall. Die Dichte kann auf extrem niedrige Werte von unter 0,5g/cm$^3$ gesenkt werden und die Folie läßt sich dennoch beim Tiefziehen einwandfrei applizieren, ohne daß eine störende Orangenhaut auftritt.

In einer weiteren Ausführungsform kann die mikroporöse Schicht mit einer weiteren, Deckschicht versehen werden, wobei die mikroporöse Schicht bei der erfindungsgemäßen Verwendung dieser mehrschichtigen Ausführungsform dem Behältnis zugewandt wird und sich beim Tiefziehen mit dem Formkörper verbindet. Entsprechend bildet die zusätzlichen Deckschicht die Außenseite des Etiketts. Die zusätzliche Deckschicht kann beispielsweise durch Laminierung oder Kaschierung der porösen Schicht mit einer weiteren Folie aufgebracht werden. Vorzugsweise handelt es sich um eine coextrudierte Deckschicht. In diesen mehrschichtigen Ausführungsformen beträgt die Dicke der mikroporösen Schicht mindestens 20 $\mu$m, vorzugsweise liegt die Dicke der porösen Schicht in einem Bereich von 25 bis 100$\mu$m, insbesondere 30 bis 50$\mu$m. Die Dicke dieser Deckschicht liegt im allgemeinen in einem Bereich von 0,5 - 5 $\mu$m, vorzugsweise 1 - 3 $\mu$m.

Die gegebenenfalls coextrudierte Deckschicht enthält im allgemeinen mindestens 70 Gew.-%, vorzugsweise 75 bis <100 Gew.-%, insbesondere 90 bis 98 Gew.-%, eines Polyolefins, vorzugsweise eines Propylenpolymeren und gegebenenfalls weitere übliche Additive wie Neutralisationsmittel, Stabilisator, Antistatika, Gleitmittel, z.B. Fettsäureamide oder Siloxane oder Antiblockmittel in jeweils wirksamen Mengen.

Das Propylenpolymere der Deckschicht ist beispielsweise ein Propylenhomopolymer, wie vorstehend für die poröse Schicht bereits beschrieben oder ein Copolymer aus Propylen und Ethylen oder Propylen und Butylen oder Propylen und einem anderen Olefin mit 5 bis 10 Kohlenstoffatomen. Für die Zwecke der Erfindung sind für die Deckschicht auch Terpolymere von Ethylen und Propylen und Butylen oder Ethylen und Propylen und einem anderen Olefin mit 5 bis 10 Kohlenstoffatomen geeignet. Weiterhin können Mischungen oder Blends aus zwei oder mehreren der genannten Co- und Terpolymeren eingesetzt werden.

Für die Deckschicht sind statistische Ethylen-Propylen-Copolymere und Ethylen-Propylen-Butylen-Terpolymere bevorzugt, insbesondere statistische Ethylen-Propylen-Copolymere mit einem Ethylengehalt von 2 bis 10 Gew.-%,

bevorzugt 5 bis 8 Gew.-%, oder statistische Ethylen-Propylen-Butylen-1-Terpolymere mit einem Ethylengehalt von 1 bis 10 Gew.-%, bevorzugt 2 bis 6 Gew.-%, und einem Butylen-1-Gehalt von 3 bis 20 Gew.-%, bevorzugt 8 bis 10 Gew.-%, jeweils bezogen auf das Gewicht des Co- oder Terpolymeren.

Die vorstehend beschriebenen statistischen Co- und Terpolymeren weisen im allgemeinen einen Schmelzflußindex von 1,5 bis 30 g/10 min, vorzugsweise von 3 bis 15g/10 min, auf. Der Schmelzpunkt liegt im Bereich von 105°C bis 140°C. Das vorstehend beschriebene Blend aus Co- und Terpolymeren hat einen Schmelzflußindex von 5 bis 9 g/10 min und einen Schmelzpunkt von 120 bis 150°C. Alle vorstehend angegebenen Schmelzflußindices werden bei 230°C und einer Kraft von 2,16kg (DIN 53735) gemessen.

Gegebenenfalls kann die Oberfläche dieser Deckschicht zur Verbesserung der Bedruckbarkeit mit einer Corona-, Flamm oder Plasmabehandlung versehen werden. Die Dichte der Folie wird durch die nicht poröse Deckschicht, die auch keine Vakuolen enthält, gegenüber einschichtigen Ausführungsformen nur unwesentlich erhöht und liegt daher auch für diese Ausführungsformen im allgemeinen in einem Bereich von 0,25 bis 0,8 g/cm3, vorzugsweise 0,25 bis 0,6g/cm3, insbesondere < 0,5 g/cm3.

Gegebenenfalls kann die Deckschicht zusätzlich übliche Additive wie Stabilisatoren, Neutralisationsmittel, Antiblockmittel, Gleitmittel, Antistatika etc. in jeweils üblichen Mengen enthalten.

Die poröse Folie für die erfindungsgemäße Verwendung wird vorzugsweise nach dem an sich bekannten Extrusionsverfahren oder Coextrusionsverfahren hergestellt.

Im Rahmen dieses Verfahrens wird so vorgegangen, daß das Polypropylen, welches mit ß-Nukleierungsmittel vermischt ist, in einem Extruder aufgeschmolzen und durch eine Flachdüse auf eine Abzugswalze extrudiert wird, auf der sich die Schmelze unter Ausbildung der ß-Kristallite verfestigt. Im Falle der zweischichtigen Ausführungsform erfolgt die entsprechende Coextrusion zusammen mit der Deckschicht. Die Abkühltemperaturen und Abkühlzeiten werden so gewählt, daß ein möglichst hoher Anteil an ß-kristallinem Polypropylen in der Vorfolie entsteht. Diese Vorfolie mit einem hohen Anteil an ß-kristallinem Polypropylen wird anschließend derart biaxial gestreckt, daß es bei der Verstreckung zu einer Umwandlung der ß-Kristallite in alpha Polypropylen und zur Ausbildung der Netzwerk-Struktur kommt. Die biaxial gestreckte Folie wird abschließend thermofixiert und gegebenenfalls auf einer Oberfläche corona-, plasma- oder flammbehandelt.

Die biaxiale Streckung (Orientierung) wird im allgemeinen aufeinanderfolgend durchgeführt werden, wobei vorzugsweise zuerst längs (in Maschinenrichtung) und dann quer (senkrecht zur Maschinenrichtung) gestreckt wird.

Die Abzugswalze oder die Abzugswalzen werden bei einer Temperatur von 60 bis 130°C, vorzugsweise 80 bis 120°C gehalten, um die Ausbildung eines hohen Anteils an ß-kristallinem Polypropylen zu fördern.

Bei der Verstreckung in Längsrichtung beträgt die Temperatur weniger als 140°C, vorzugsweise 90 bis 125 °C. Das Streckverhältnis liegt in einem Bereich 2:1 bis 5:1 Die Verstreckung in Querrichtung erfolgt bei einer Temperatur von größer 140°C, vorzugsweise bei 145 bis 160°C. Das Querstreckverhältnis liegt in einem Bereich von 3:1 bis 6:1 gestreckt.

Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich im allgemeinen ihre Thermofixierung (Wärmebehandlung) an, wobei die Folie etwa 0,5 bis 10 s lang bei einer Temperatur von 110 bis 150°C gehalten wird. Anschließend wird die Folie in üblicher Weise mit einer Aufwickeleinrichtung aufgewickelt.

Vorzugsweise wird, wie oben erwähnt, nach der biaxialen Streckung üblicherweise eine Oberfläche der Folie nach einer der bekannten Methoden corona-, plasma-oder flammbehandelt.

Für die alternative Coronabehandlung wird die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 38 bis 45 mN/m bevorzugt sind.

Nach diesem Verfahren erhält man eine Folie mit einer poröse Schicht. Die Folie zeichnet sich insgesamt durch eine weiße oder opake Erscheinung aus. Die poröse Schicht hat eine netzähnliche Struktur (siehe Figuren 1 a und 1 b), die gegenüber Gasen durchlässig ist. Die Gasdurchlässigkeit der porösen Schicht kann beispielsweise durch den Gurley Wert bestimmt werden, welcher angibt wie lange der Durchtritt von 100 cm$^3$ Luft unter definierte Bedingungen durch die einschichtige Folie dauert.

Es wurde gefunden, daß höhere Gasdurchlässigkeiten, d.h. entsprechend niedrige Gurley Werte, besonders vorteilhaft hinsichtlich Blasenbildung und Haftung sind. Daher sind Folien bevorzugt, welche eine mikroporöse Schicht mit einem Gurley Wert von >50 bis 5000 sec. aufweisen. Überraschenderweise findet man jedoch auch sehr gute Ergebnisse mit vergleichsweise dichteren Folien bei denen der Gurley Wert über 5000 liegt. Es wurde gefunden, daß Gurley-Werte bis zu 300.000 sec betragen können und dennoch die geforderte gute Haftung und Blasenfreiheit erzielt werden kann. Es ist überraschend, daß Folien mit vergleichsweise niedrigeren Durchlässigkeiten gleichermaßen gut geeignet sind, da die gute Haftung und Blasenfreiheit ursächlich auf eine gute Entlüftung durch die poröse Struktur der Schicht zurückgeführt wird. Es war somit zu erwarten, daß eine Folie mit geringeren Gasdurchlässigkeiten von >5000 Gurley schlechter für die Tiefziehanwendung geeignet sein würde. Dies ist überraschenderweise nicht der Fall.

Somit sind auch Ausführungsformen mit Gurley-Werten der porösen Schicht von >5000 bis 300.000 Gurley, vorzugsweise 8000 bis 250.000 Gurley bevorzugt. Diese Ausführungsformen lassen sich mit höheren Produktionsgeschwindigkeiten herstellen und weisen daher wesentliche wirtschaftliche Vorteile gegenüber den hochdurchlässigen Ausführungsformen auf. Insbesondere können hier die Abkühlzeiten auf der Abzugswalze verkürzt werden, wodurch die Produktionsgeschwindigkeit erheblich gesteigert wird.

Erfindungsgemäß wird die Folie als Etikett beim Tiefziehen eingesetzt. Bei geeigneten Tiefziehverfahren werden dicke Folie aus thermoplastischen Polymeren bei erhöhter Temperatur unter Einwirkung von pneumatischen Kräften oder durch mechanische Einwirkung von Formwerkzeugen plastisch geformt. Die plastische Formung mittels pneumatischer Kräften kann durch Unterdruck (Tiefziehen) oder Überdruck, d.h. Druckluft erfolgen. Derartige Verfahren sind im Stand der Technik bekannt und werden im englischen Sprachgebrauch als "thermoforming" bezeichnet. Die Verfahren und ihre Ausgestaltung im Einzelnen sind beispielsweise beschrieben in Rosato's Plastics Encyclopedia and Dictionary, Seite 755 bis 766, auf welche hiermit ausdrücklich Bezug genommen wird.

Plastische Formung unter Einwirkung pneumatischer Kräfte erfolgt beispielsweise mittels Unterdruck nach dem üblicherweise die tiefzuziehende Folie mittels eines Oberstempels vorgeformt wurde. Vor dem eigentlichen Tiefziehen wird die Etikettenfolie in den Formkörper eingelegt und die Tiefziehfolie so darüber gelegt, daß der Formkörper luftdicht abgeschlossen wird. An den Formkörper wird in geeignetere Weise ein Unterdruck oder Vakuum angelegt. Aufgrund der Druckdifferenz wirkt ein Sog auf die Tiefziehfolie. Ein Heizelement ist über der Folienoberfläche angebracht und erwärmt die Folie bis sie sich in Richtung des Formkörpers verformt. Temperatur, Unterdruck werden bei dem Prozeß so gewählt, daß sich die Folie an den Formkörper mit dem eingelegten Etikett formschlüssig anlegt und sich dabei mit dem Etikett verbindet. Nach Beseitigen der Druckdifferenz und Abkühlung kann der etikettierten tiefgezogenen Behälter entnommen werden.

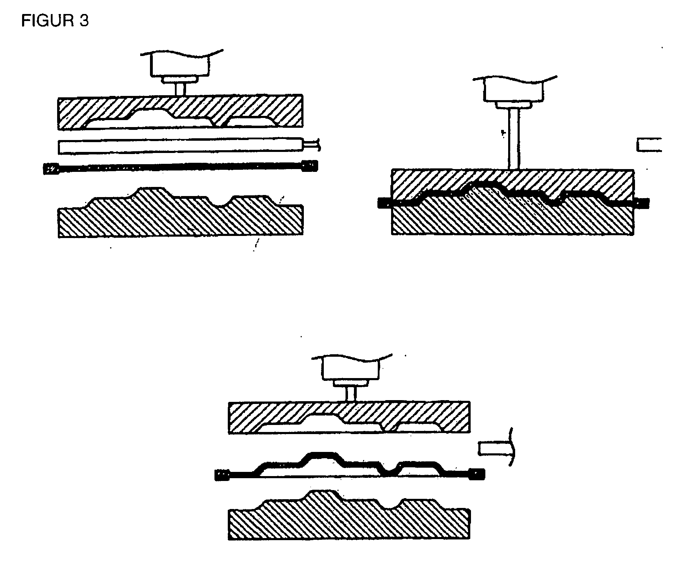

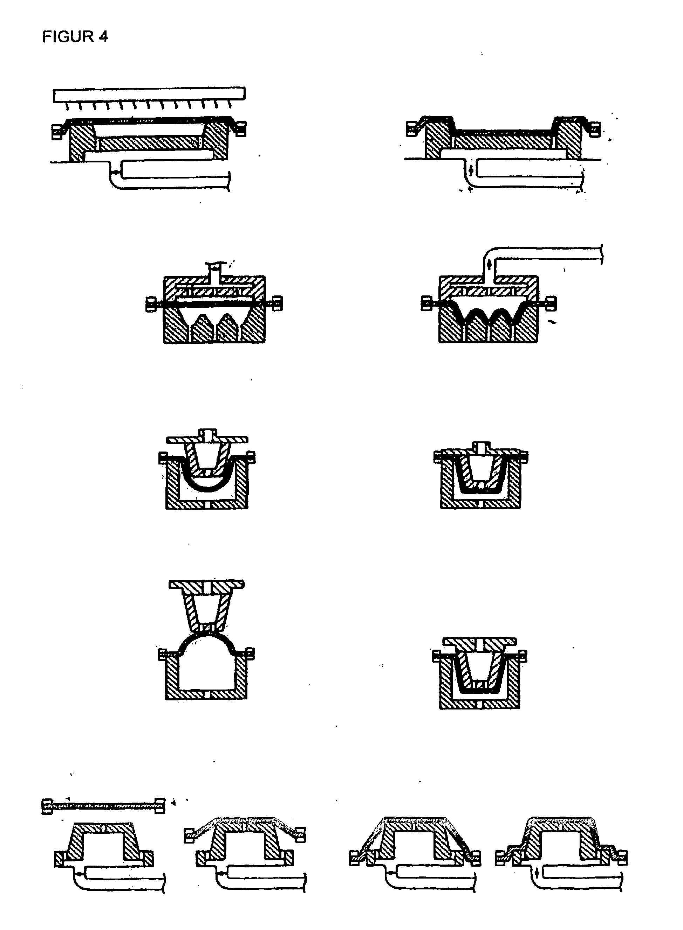

Verschieden Ausführungen der Tiefziehverfahren sind beispielhaft in Fig. 3 dargestellt und zeigen schematisch Vorrichtungen zum Tiefziehen. Weitere Verfahren zum Tiefziehen sind in den Figuren 4 dargestellt. Beim Tiefziehen können grundsätzlich beliebige geeignete evakuierbaren Formen und gegebenenfalls Formwerkzeuge eingesetzt werden.

Zur Charakterisierung der Rohstoffe und der Folien wurden die folgenden Meßmethoden benutzt:

Schmelzflußindex

Der Schmelzflußindex der Propylenpolymeren wurde nach DIN 53 735 bei 2,16 kg Belastung und 230 °C gemessen und bei 190°C und 2,16 kg für Polyethylene.

Schmelzpunkte

DSC-Messung, Maxima der Schmelzkurve, Aufheizgeschwindigkeit 20 K/min.

ß-Kristallgehalt

Zur Bestimmung des ß-kristallinen Anteils (beispielsweise in der Vorfolie) in Polypropylen wird die DSC-Methode verwendet

Die Charakterisierung mittels DSC wird in J. o. Appl. Polymer Science, Vol. 74, p.: 2357-2368, 1999 von Varga beschrieben und folgendermaßen durchgeführt: Die mit dem ß-Nukleator additivierte Probe wird in der DSC zunächst mit einer Aufheizrate von 20°C/min auf 220°C erhitzt und aufgeschmolzen (1. Aufheizen). Danach wird sie mit einer Kühlrate von 10°C/min auf 100°C abgekühlt, bevor sie mit einer Heizrate von 10°C/min (2. Aufheizen) wieder aufgeschmolzen wird. Beim 2. Aufheizen wird aus dem Verhältnis der Schmelzenthalpien der ß-kristallinen Phase ($H_\beta$) zu der Summe der Schmelzenthalpien von ß- und $\alpha$-kristalliner Phase ($H_\beta + H_\alpha$) der Kristallinitätsgrad $K_{\beta,DSC}$ bestimmt.

Dichte

Die Dichte wird nach DIN 53 479, Verfahren A, bestimmt.

Porosität

Die Porosität wird aus den Dichten des ungevoideten PP ($\delta_{PP}$) und der Dichte des gevoideten PP ($\delta_{PPV}$), wie

7

folgt berechnet :

$$\text{Porosität [\%]} = 100^*(1-[\delta_{PPV}/\delta_{PP}])$$

Permeabilität (Gurley-Wert)

Die Permeabilität der Etikettenfolien wurde mit dem Gurley Tester 4110, nach ASTM D 726-58 gemessen. Dabei wird die Zeit bestimmt die 100 cm$^3$ Luft benötigen, um durch die Etikettenfläche von 1 Inch$^2$ (6,452 cm$^2$) zu permeieren. Die Druckdifferenz über der Folie entspricht dabei dem Druck einer Wassersäule von 12,4 cm Höhe. Die benötigte Zeit entspricht dann dem Gurley-Wert.

Die Erfindung wird nunmehr durch die nachfolgenden Beispiele erläutert.

Beispiel 1

Nach dem Extrusionsverfahren wurde aus einer Breitschlitzdüse bei einer Extrusionstemperatur von 245 °C eine einschichtige Folie extrudiert. Die Folie hatte die folgende Zusammensetzung:

| | |
|---|---|
| ca. 50 Gew.-% | Propylenhomopolymerisat (PP) mit einem n-heptanlöslichen Anteil von 4,5 Gew.-% (bezogen auf 100 % PP) und einem Schmelzpunkt von 165 °C; und einem Schmelzflußindex von 3,2 g/10 min bei 230 °C und 2,16 kg Belastung (DIN 53 735) und |
| ca. 49,9 Gew.-% | Propylen-Ethylen-Blockcopolymerisat mit einem Ethylenanteil von ca. 5 Gew.-% bezogen auf das Blockcopolymer und einem MFI (230°C und 2,16 kg) von 6 g/10min |
| 0,1 Gew.-% | Ca- Pimelat als ß-Nukleierungsmittel |

Die Folie enthielt zusätzlich Stabilisator und Neutralisationsmittel in üblichen Mengen.

Die aufgeschmolzene Polymermischung wurde nach der Extrusion über eine erste Abzugswalze und ein weiteres Walzentrio abgezogen und verfestigt, anschließend längsgestreckt, quergestreckt und fixiert, wobei im einzelnen die folgenden Bedingungen gewählt wurden:

| | |
|---|---|
| Extrusion: | Extrusionstemperatur 245 °C |
| Abkühlwalze: | Temperatur 125°C, |
| Abzugsgeschwindigkeit: | 1,5 m/min (Verweilzeit auf der Abzugswalze: 55 sec) |
| Längsstreckung: | Streckwalze T = 90 °C |
| Längsstreckung um den | Faktor 4 |
| Querstreckung: | Aufheizfelder T = 145 °C |
| Streckfelder | T = 145 °C |
| Querstreckung um den | Faktor 4 |

Die so hergestellte poröse Folie war ca. 80 $\mu$m dick und wies eine Dichte von 0,35 g/cm$^3$ auf und zeigte ein gleichmäßiges weiß-opakes Aussehen. Die Porosität betrug 56% und der Gurley-Wert 1040 s.

Beispiel 2

Es wurde eine Folie wie in Beispiel 1 beschrieben hergestellt. Im Unterschied zu Beispiel 1 wurden jetzt als ß-Nukleierungsmittel 0,3 Gew.-% bezogen auf das Gewicht der Schicht eines Dicarboxamids eingesetzt. Die so hergestellte poröse Folie war ca. 70 $\mu$m dick und wies eine Dichte von 0,40 g/cm$^3$ auf und zeigte ein gleichmäßiges weiß-opakes Aussehen. Die Porosität betrug 51% und der Gurley-Wert 1200 s.

Beispiel 3

Es wurde eine Folie wie in Beispiel 1 beschrieben hergestellt. Die Zusammensetzung wurde nicht geändert. Im Unterschied zu Beispiel 1 wurde bei der Herstellung eine höhere Abzugsgeschwindigkeit: 3 m/min (Verweilzeit auf der Abzugswalze: 27 sec) gewählt und eine Abzugstemperatur von 120°C eingestellt. Die so hergestellte poröse Folie war ca. 60 $\mu$m dick und wies eine Dichte von 0,5 g/cm$^3$ auf und zeigte ein gleichmäßiges weiß-opakes Aussehen. Die Porosität betrug 41 % und der Gurley-Wert 36.000 s.

Beispiel 4

Es wurde eine Folie wie in Beispiel 1 beschrieben hergestellt. Die Zusammensetzung wurde nicht geändert. Im Unterschied zu Beispiel 1 wurde bei der Herstellung eine höhere Abzugsgeschwindigkeit von 5 m/min (Verweilzeit auf der Abzugswalze: 17 sec) gewählt und eine Abzugstemperatur von 115°C eingestellt. Die so hergestellte poröse Folie war ca. 90 $\mu$m dick und wies eine Dichte von 0,5 g/cm$^3$ auf und zeigte ein gleichmäßiges weiß-opakes Aussehen. Die Porosität betrug 42 % und der Gurley-Wert 170.000 s.

Vergleichsbeispiel 1

Es wurde durch Coextrusion und durch anschließende stufenweise Orientierung in Längs- und in Querrichtung eine opake dreischichtige Folie mit einem Schichtaufbau ABC mit einer Gesamtdicke von 80 $\mu$m hergestellt. Die Deckschichten hatten eine Dicke von jeweils 0,6 $\mu$m.

Basisschicht B (= vakuolenhaltige Schicht):

|  |  |
|---|---|
| 93 Gew.-% | Propylenhomopolymer mit einem Schmelzpunkt von 165°C |
| 7,0 Gew.-% | CaCO3 vom Typ Millicarb mit einem mittleren Durchmesser von 3$\mu$m |

Deckschicht A.

|  |  |
|---|---|
| 99,67 Gew.-% | statistisches Ethylen-Propylen-Copolymeres mit einem C2-Gehalt von 3,5 Gew.-% |
| 0,33 Gew.-% | SiO2 als Antiblockmittel mit einer mittleren Durchmesser von 2 $\mu$m |
| Deckschicht B | wie Deckschicht A |

Die Herstellungsbedingungen in den einzelnen Verfahrensschritten waren:

|  |  |
|---|---|
| Extrusion Temperaturen | 280°C |
| Temperatur der Abzugswalze: | 30 °C |
| Längsstreckung: Temperatur: | 122 °C |
| Längsstreckverhältnis: | 6,0 |
| Querstreckung: Temperatur: | 155 °C |
| Querstreckverhältnis: | 8,0 |
| Fixierung: Temperatur: | 140 °C |
| Konvergenz: | 15 % |

Auf diese Weise wurde eine opake vakuolenhaltige Folie erhalten mit einer Dichte von 0,6 g/cm3. Die Folie war nicht porös, ein Gurley Wert ließ sich daher an dieser Folie nicht bestimmen.

Erfindungsgemäße Verwendung

Die Folien gemäß den Beispielen und dem Vergleichsbeispiel wurden als Etikettenfolien beim Tiefziehen eines Margarinebechers eingesetzt. Hierfür wurden die Etiketten kreuzförmig zugeschnitten, die Zuschnitte gestapelt und in einem Magazin an der Tiefziehanlage bereitgestellt. Die Tiefziehanlage war mit einem Oberstempel als Formungshilfe ausgerüstet. Die Etiketten wurden durch Ansaugung aus dem Magazin entnommen und so gefaltet, daß die Flächen des kreuzförmigen Etiketts, die späteren Seitenwände des Behälters bedecken. Das gefaltete Etikett wurde in die Form eingelegt, mittels Hilfskern platziert und durch Ansaugung gehalten.

Eine 600 $\mu$m dicke PP Tiefziehfolie wurde mittels IR Strahler bis in den Bereich ihrer plastischen Verformbarkeit erwärmt (>165°C). Durch Absenken des Oberstempels und Anlegen eines Vakuums durch Bohrungen in der Wandung der Form wurde die Tiefziehfolie ausgeformt, wobei sie sich mit dem eingelegten Etikett verbindet.

Die etikettierten Behälter wurden hinsichtlich Haftung und Optik überprüft. Es zeigte sich, das die Folie des Vergleichsbeispiels 1 deutliche Blasenbildung zwischen Folie und Behälterwandung und hierdurch eine beeinträchtigte Haftung aufwiesen.

Die mikroporösen Folien gemäß den Beispielen 1-4 zeigten ein homogenes Aussehen der Etikettenoberfläche ohne Blasenbildung oder andere optische Fehler, sowie eine gute Haftung des Etiketts auf der Behälteroberfläche. Überraschenderweise unterscheiden sich die etikettierten Behälter nicht in ihrer optische Qualität, obwohl die Folien nach Beispiel 3 und 4 wesentlich geringere Gasdurchlässigkeiten als übliche poröse Folien aufweisen.

**Patentansprüche**

1. Verwendung einer biaxial orientierten Folie mit einer porösen Schicht, die Propylenpolymer und mindestens ein ß-Nukleierungsmittel enthält und deren
Mikroporosität durch Umwandlung von ß-kristallinem Polypropylen beim Verstrecken der Folie erzeugt wird, zur Etikettierung von Behältnissen beim Tiefziehen.

2. Verwendung nach Anspruch 1, **dadurch gekennzeichnet, daß** die Porosität der Schicht in einem Bereich von >50 bis 5000 Gurley liegt.

3. Verwendung nach Anspruch 1, **dadurch gekennzeichnet, daß** die Porosität der Schicht in einem Bereich von >5000 bis 300.000, vorzugsweise 8000 bis 250.000 Gurley liegt.

4. Verwendung nach einem der Ansprüche 1 bis 3, **dadurch gekennzeichnet, daß** die Dichte der Folie in einem Bereich 0,2 bis 0,80 g/cm$^3$ liegt.

5. Verwendung nach einem der Ansprüche 1 bis 4, **dadurch gekennzeichnet, daß** die mikroporöse Schicht ein Propylenhomopolymeres und/oder ein Propylenblockcopolymeres enthält.

6. Verwendung nach einem der Ansprüche 1 bis 5, **dadurch gekennzeichnet, daß** das die mikroporöse Schicht eine Mischung aus Propylenhomopolymer und Propylenblockcopolymer enthält und das Verhältnis in einem Bereich von 90:10 bis 10:90 liegt.

7. Verwendung nach einem der Ansprüche 1 bis 6, **dadurch gekennzeichnet, daß** die mikroporöse Schicht 0,001 Gew% bis 5 Gew%.- bezogen auf das Gewicht derßnukleierten Schicht ß-Nukleierungsmittel enthält.

8. Verwendung nach einem der Ansprüche 1 bis 7, **dadurch gekennzeichnet, daß** das Nukleiierungsmittel ein Calciumsalz der Pimelinsäure oder der Suberinsäure oder ein Carboxamid ist.

9. Verwendung nach einem der Ansprüche 1 bis 8, **dadurch gekennzeichnet, daß** die mikroporöse Schicht auf einer Seite mit einer Deckschicht versehen ist.

10. Verwendung nach einem der Ansprüche 1 bis 9, **dadurch gekennzeichnet, daß** die Folie nach dem Stenterverfahren hergestellt ist und die Abzugswalzentemperatur in einem Bereich von 60 bis 130 °C liegt.

11. Verwendung nach einem der Ansprüche 1 bis 10, **dadurch gekennzeichnet, daß** das appilzierte Etikett keine Orangenhaut aufweist.

12. Verfahren zur Herstellung eines etikettierten Behälters mittels Tiefziehen bei dem ein zugeschnittenes Etikett in eine Form eingelegt und eine tiefziehbare Dickfolie mittels Heizelemente auf eine Temperatur erwärmt wird, bei der das Polymere thermoplastisch verformbar ist und anschließend die Folie mittels Formwerkzeug oder pneumatisch in eine Form gezogen wird, so daß sich die Folie der Form anpaßt und ein Behälter geformt und gleichzeitig das eingelegte Etikett appliziert wird, **dadurch gekennzeichnet, daß** das Etikett aus einer biaxial orientierten Folie mit einer mikroporösen Schicht besteht, die eine offenporige netzartige Struktur aufweist, welche bei der Herstellung der Folie durch Umwandlung von ß-kristallinem Polypropylen in alpha-kristallines Polypropylen beim Verstrecken erzeugt wurden., wobei die mikroporöse Schicht dem Behältnis zugewendet ist.

**Claims**

1. Use of a biaxially oriented film having a porous layer, which contains propylene polymer and at least one β-nucleating agent and of which the microporosity is generated by converting β-crystalline polypropylene during stretching of the film, for labelling containers in thermoforming.

2. The use according to Claim 1, **characterised in that** the porosity of the layer lies in a range from > 50 to 5,000 Gurley.

3. The use according to Claim 1, **characterised in that** the porosity of the layer lies in a range from > 5,000 to 300,000, preferably 8,000 to 250,000 Gurley.

4. The use according to one of Claims 1 to 3, **characterised in that** the density of the film lies in a range from 0.2 to 0.80 g/cm$^3$.

5. The use according to one of Claims 1 to 4, **characterised in that** the microporous layer contains a propylene homopolymer and/or a propylene block copolymer.

6. The use according to one of Claims 1 to 5, **characterised in that** the microporous layer contains a mixture of propylene homopolymer and propylene block copolymer and the ratio lies in a range from 90:10 to 10:90.

7. The use according to one of Claims 1 to 6, **characterised in that** the microporous layer contains 0.001 % by weight to 5 % by weight β-nucleating agent in relation to the weight of the β-nucleated layer.

8. The use according to one of Claims 1 to 7, **characterised in that** the nucleating agent is a calcium salt of pimelic acid or suberic acid or a carboxamide.

9. The use according to one of Claims 1 to 8, **characterised in that** the microporous layer is provided with a cover layer on one side.

10. The use according to one of Claims 1 to 9, **characterised in that** the film is produced by the tentering method and the drawing-off roll temperature lies in a range from 60 to 130 °C.

11. The use according to one of Claims 1 to 10, **characterised in that** the applied label does not have an orange-peel effect.

12. A method for producing a labelled container using thermoforming, in which a label which is cut to size is laid in a mould and a thermoformable thick film is heated using heating elements to a temperature at which the polymer is thermoplastically deformable and subsequently the film is drawn into a mould using a moulding tool or pneumatically, so that the film is tailored to the mould and a container is moulded and simultaneously the inserted label is applied, **characterised in that** the label consists of a biaxially oriented film having a microporous layer, which has an open-pored, net-like structure, which was generated during the production of the film by converting β-crystalline polypropylene into alpha-crystalline polypropylene during the stretching, the microporous layer facing toward the container.

**Revendications**

1. Utilisation d'une feuille biaxialement orientée comportant une couche poreuse laquelle contient du polymère de propylène et contient un agent de nucléation bêta et laquelle présente une microporosité générée par conversion de polypropylène bêta-cristallin lors de l'orientation de ladite feuille, pour étiqueter des récipients lors d'un processus d'emboutissage.

2. Utilisation selon la revendication 1, **caractérisée en ce que** la porosité de ladite feuille est comprise entre > 50 et 5000 Gurley.

3. Utilisation selon la revendication 1, **caractérisée en ce que** la porosité de ladite feuille est comprise entre > 5000 et 300000 Gurley, préférentiellement entre 8000 et 250000 Gurley.

4. Utilisation selon l'une des revendications 1 à 3, **caractérisée en ce que** la densité de ladite feuille est comprise entre 0,2 et 0,80 g/cm$^3$.

5.  Utilisation selon l'une des revendications 1 à 4, **caractérisée en ce que** ladite couche microporeuse contient un homopolymère de propylène et/ou copolymère à blocs de propylène.

6.  Utilisation selon l'une des revendications 1 à 5, **caractérisée en ce que** la couche microporeuse contient un mélange d'homopolymère de propylène et de copolymère à blocs de propylène, leur rapport étant compris entre 90 : 10 et 10 : 90.

7.  Utilisation selon l'une des revendications 1 à 6, **caractérisée en ce que** la couche microporeuse contient de 0,001 % en poids à 5 % en poids d'agent de nucléation bêta, par rapport au poids de la couche ayant subi une nucléation bêta.

8.  Utilisation selon l'une des revendications 1 à 7, **caractérisée en ce que** ledit agent de nucléation est un sel de calcium de l'acide pimélique ou de l'acide subérique ou bien un amide d'acide carboxylique.

9.  Utilisation selon l'une des revendications 1 à 8, **caractérisée en ce qu'**une face de la couche microporeuse est recouverte par une couche de couverture.

10. Utilisation selon l'une des revendications 1 à 9, **caractérisée en ce que** la feuille est fabriquée selon le procédé à rame et la température des cylindres d'appel est comprise entre 60 et 130 °C.

11. Utilisation selon l'une des revendications 1 à 10, **caractérisée en ce qu'**après son application, l'étiquette ne présente pas d'aspect de cellulite.

12. Procédé de fabrication, par emboutissage, d'un récipient étiqueté consistant à placer une étiquette découpée dans un moule et à chauffer une feuille épaisse apte à l'emboutissage au moyen d'un élément chauffant jusqu'à atteindre une température permettant une déformation thermoplastique du polymère et à emboutir ensuite ladite feuille dans un moule en mettant en oeuvre un outil mise en forme ou une force pneumatique, faisant en sorte que la feuille vienne épouser le moule pour ainsi former un récipient et appliquer en même temps l'étiquette préalablement mise en place, **caractérisé en ce que** l'étiquette est constitué d'une feuille biaxialement orientée comportant une couche microporeuse présentant une structure réticulée à pores ouverts laquelle a été générée dans le cadre de la fabrication de cette feuille en convertissant le polypropylène bêta-cristallin en polypropylène alpha-cristallin lors de l'orientation, la couche microporeuse étant tournée vers le récipient.

Figur 1a

Figur 2a

Figur 2b

FIGUR 3

FIGUR 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0245956 A
- EP 0865909 A
- WO 03091316 A
- WO 037091316 A
- DE 4420991
- DE 3610644
- DE 4420989
- EP 0557721 A


**In der Beschreibung aufgeführte Nicht-Patentliteratur**

- Rosato's Plastics Encyclopedia and Dictionary. 755-766
- **VARGA.** *J. o. Appl. Polymer Science,* 1999, vol. 74, 2357-2368